# EUROPÄISCHE PATENTSCHRIFT

(11) **EP 3 614 182 B1**
(45) Veröffentlichungstag und Bekanntmachung des Hinweises auf die Patenterteilung: **17.03.2021**
(21) Anmeldenummer: 18190194.3
(22) Anmeldetag: 22.08.2018
(51) Int. Cl.: G01V 8/12, G01V 8/20

(54) **LICHTSCHRANKENANORDNUNG**
OPTICAL BARRIER DEVICE
SYSTÈME DE BARRIÈRE LUMINEUSE

(43) Veröffentlichungstag der Anmeldung: 26.02.2020
(73) Patentinhaber: Leuze electronic GmbH + Co. KG, 73277 Owen/Teck (DE)
(72) Erfinder: HÖRDERICH, Johann, 82291 Mammendorf (DE); OLBRICH, Sebastian, 80992 München (DE); RAUSCHER, Thorsten, 81379 München (DE)
(74) Vertreter: Ruckh, Rainer Gerhard

(56) Entgegenhaltungen:
- EP-A1- 1 498 747
- EP-A1- 2 492 714
- EP-A1- 3 147 694
- EP-A2- 2 071 363
- DE-A1- 10 041 182

## Beschreibung

Die Erfindung betrifft eine Lichtschrankenanordnung und ein Verfahren zur Erfassung von Objekten in einem Überwachungsbereich mittels einer Lichtschrankenanordnung.

Derartige Lichtschrankenanordnungen können im einfachsten Fall als Lichtschranken, insbesondere Einweglichtschranken ausgebildet sein. Eine derartige Lichtschranke weist einen Sender und einen Empfänger auf, die an gegenüberliegenden Rändern eines Überwachungsbereichs angeordnet sind. Bei freiem Überwachungsbereich werden vom Sender emittierte Lichtstrahlen ungehindert durch den Überwachungsbereich zum Empfänger geführt. Bei einem Objekteingriff wird der Strahlengang der Lichtstrahlen zum Empfänger wenigstens teilweise unterbrochen. In einer Auswerteeinheit erfolgt die Auswertung der Empfangssignale, so dass festgestellt wird, ob ein Objekteingriff im Überwachungsbereich vorliegt oder nicht und ein entsprechendes binäres Objektfeststellungssignal als Ausgangssignal generiert wird.

Bei bekannten Lichtstrahlen kann der Sender definierte Pulsfolgen emittieren. Werden diese Pulsfolgen empfangsseitig erkannt, liegt ein freier Überwachungsbereich vor.

Weiter bekannt sind auch Lichtschrankenanordnungen in Form von Lichtvorhängen. Ein solcher Lichtvorhang ist beispielsweise aus der EP 2 071 363 A2 bekannt. Der dort beschriebene Lichtvorhang umfasst eine Anzahl von Sendelichtstrahlen emittierenden Sendern aufweisende Sendereinheit und eine von der Sendereinheit elektrisch entkoppelten, eine Anzahl von Empfängern aufweisende Empfängereinheit. Jeweils ein Sender bildet mit einem Empfänger eine Strahlachse, wobei die Sender und Empfänger der einzelnen Strahlachsen zur Erfassung von Objekten in einem Überwachungsbereich zyklisch einzeln nacheinander aktiviert werden. Ein aktivierter Sender emittiert Sendelichtstahlen in Form von wenigstens eine Pulsgruppe bildenden Pulsen und anhand einer Strahlachse erfolgt die Synchronisierung aller Strahlachsen des Lichtgitters. Die vom Sender dieser Strahlachse emittierten Pulse unterscheiden sich hinsichtlich wenigstens einer Kenngröße in Form der Breiten der Pulse oder in Form der Pausen oder Abstände zwischen den Pulsen von den Pulsen der weiteren Strahlachsen.

Ein Vorteil dieses Lichtvorhangs besteht darin, dass anhand der von den Sendern des Lichtvorhangs emittierten Sendelichtstrahlen eine optische Synchronisierung des Lichtvorhangs möglich ist.

Nachteilig bei derartigen Lichtvorhängen und auch Lichtschranken ist, dass für unterschiedliche Sender- und Empfängerabstände die Signalstärken der empfangenen Lichtpulse stark variieren. Aufgrund dessen ergeben sich abstandsabhängig signifikante Verschlechterungen der Pulsformen der empfangenen Lichtpulse, so dass diese nicht mehr eindeutig identifiziert werden können, was zu Fehldetektionen führt.

Die EP 3 147 694 A1 betrifft ein Verfahren zum Betreiben eines photoelektrischen Sensors und photoelektrischer Sensor. Dabei wird ein gepulster Lichtstrahl durch eine Sendeeinheit ausgesendet, der durch eine in Abstand zur Sendeeinheit angeordnete Empfangseinheit empfangen wird und in ein Empfangssignal umgewandelt wird. Bei dem Verfahren werden Messwerte des Empfangssignals durch eine Auswertevorrichtung erfasst. Die Erfassung der Messwerte wird durch die Auswertevorrichtung mit dem Empfangssignal synchronisiert. Dabei werden durch einen Flankendetektor der Auswertevorrichtung Ereignispunkte positiver und/oder negativer Flanken von Impulsen des Empfangssignals ermittelt. Durch eine Steuereinheit der Auswertevorrichtung, zu der die Ereigniszeitpunkte geleitet werden, wird nach einem Ereigniszeitpunkt ein folgender Ereigniszeitpunkt bestimmt, wenn er in einem Zeitintervall um einen erwarteten, folgenden Ereigniszeitpunkt liegt. Es wird eine Synchronisation durchgeführt, wenn mindesten zwei aufeinanderfolgende Ereigniszeitpunkte bestimmt worden sind. Es werden Messzeitpunkte zur Erfassung der Messwerte aus den Ereigniszeitpunkten bestimmt.

Die EP 1 498 747 A1 betrifft eine optoelektronische Vorrichtung zur Erfassung von auf einem mit einer Fördergeschwindigkeit bewegten Trägermedium angeordneten Objekten, mit einem Sendelichtstrahlen emittierenden Sender, mit einem Empfangslichtstrahlen empfangenden Empfänger und mit einer Auswerteeinheit zur Generierung eines Objektfeststellungssignals in Abhängigkeit der Empfangssignale des Empfängers. Während der Bewegung des Trägermediums ist ein Einlernvorgang durchführbar, innerhalb dessen die Empfangssignale und/oder ein Schwellwert zur Bewertung der Empfangssignale einstellbar ist beziehungsweise sind.

Die DE 100 41 182 A1 betrifft eine optoelektronische Vorrichtung zur Erfassung von Objekten in einem Überwachungsbereich mit einem einen Sendelichtstrahlen emittierenden Sender und einem Empfangslichtstrahlen empfangenden Empfänger aufweisenden Distanzsensor und mit einer Ablenkeinheit, mittels derer die Sendelichtstrahlen innerhalb des Überwachungsbereichs geführt sind. Erfindungsgemäß emittiert der Sender Sendelichtstrahlen in Form einer Folge von Sendelichtimpulsen. An wenigstens einer Referenzposition sind Sendelichtimpulse als Referenz-Sendelichtimpulse in eine ein Referenzobjekt bildende Lichtleitfaser eingekoppelt, wobei die in der Lichtleitfaser geführten Referenz-Sendelichtimpulse zumindest teilweise als Referenz-Empfangslichtimpulse zum Empfänger geführt sind. Zur Durchführung einer Referenzmessung werden die Laufzeiten der Referenz-Empfangslichtimpulse bestimmt.

Die EP 2 492 714 A1 betrifft ein Verfahren zum Betreiben eines Sicherheitslichtgitters und ein Sicherheitslichtgitter. Das Verfahren weist u. a. folgende Schritte auf: Aussenden von Lichtstrahlen von Lichtsendern einer ersten und/ oder zweiten optischen Einheit. Empfangen der Lichtstrahlen mit Lichtempfängern der zweiten und/oder ersten optischen Einheit und Erzeugen von Empfangssignalen, wobei jeweils ein Lichtsender einem Lichtempfänger gegenüberliegend zugeordnet ist, so dass die Lichtstrahlen solch gebildeter Paare von Lichtsendern und Lichtempfängern ein Schutzfeld bilden. Auswerten der Amplituden aller Empfangssignale und Ausgeben des Sicherheitsschaltsignals, wenn durch einen unzulässigen Obj ekteingriff wenigstens eine der Amplituden in einem bestimmten Bereich liegt, wobei ein Lichtstrahl zwischen Lichtsendern und Lichtempfängern als unterbrochen gilt, wenn empfangenes Licht eine erste untere Schaltschwelle unterschreitet und das Sicherheitsschaltsignal ausgebbar ist, wenn wenigstens ein Lichtstrahl unterbrochen ist, wobei eine zweite untere Schaltschwellein der Auswerteeinheit vorgesehen ist, die über der ersten unteren Schaltschwelle liegt, deren Überschreitung ein freies Schutzfeld anzeigt.

Der Erfindung liegt die Aufgabe zugrunde eine Lichtschrankenanordnung bereitzustellen, bei welcher auch bei variierenden Sender-Empfänger-Abständen eine sichere Objektdetektion gewährleistet ist.

Zur Lösung dieser Aufgabe sind die Merkmale der unabhängigen Ansprüche vorgesehen. Vorteilhafte Ausführungen und zweckmäßige Weiterbildungen der Erfindung sind in den abhängigen Ansprüchen beschrieben.

Die Erfindung betrifft eine Lichtschrankenanordnung zur Erfassung von Objekten in einem Überwachungsbereich, mit wenigstens einem Sender und wenigstens einem Empfänger an gegenüberliegenden Rändern des Überwachungsbereichs. Bei freiem Überwachungsbereich sind vom Sender emittierte Lichtstrahlen auf den Empfänger geführt. Weiter weist die Lichtschrankenanordnung eine Auswerteeinheit auf, die ausgebildet ist in Abhängigkeit von Empfangssignalen des Empfängers ein Objektfeststellungssignal zu generieren. Der Sender emittiert Lichtstrahlen in Form von Pulsfolgen mit wenigstens zwei durch eine Pulspause getrennten Lichtpulsen. Die Auswerteeinheit ist ausgebildet eine Pulsfolge dadurch zu erkennen, dass als Maß für den Pulsabstand zwischen Lichtpulsen der Abstand der fallenden Flanken der Lichtpulse und/oder der Abstand der steigenden Flanken der Lichtpulse erfasst wird. Eine Auswahl der Auswertung des Abstands der fallenden Flanken der Lichtpulse und/oder des Abstands der steigenden Flanken der Lichtpulse erfolgt abhängig von den Signalstärken der Lichtpulse.

Die Erfindung betrifft auch ein entsprechendes Verfahren.

Ein wesentlicher Vorteil der Erfindung besteht darin, dass bei dieser auch bei stark variierenden Sender-Empfänger-Abständen eine zuverlässige und sichere Funktion, insbesondere Objektdetektion gewährleistet ist.

Die Funktionsweise der Lichtschrankenanordnung ist derart, dass ein freier Überwachungsbereich dadurch erfasst wird, dass vom Sender emittierte Pulsfolgen von Lichtpulsen, die auf den Empfänger treffen, eindeutig erfasst und identifiziert werden können. Bei einem Objekteingriff in den Überwachungsbereich werden diese Pulsfolgen nicht vorher erkannt.

Damit eine sichere Objektdetektion möglich ist, ist es wesentlich, eine sichere Erkennung der Pulsfolgen des freien Überwachungsbereichs zu gewährleisten. Erfindungsgemäß wird dies auch bei stark variierenden Sender-Empfänger-Abständen dadurch erreicht, dass nicht die Lichtpulse der Pulsfolgen des Senders selbst ausgewertet werden, sondern die Pulsabstände zwischen den Lichtpulsen und zwar derart, dass hierzu der Abstand, d. h. die zeitliche Differenz der fallenden Flanken der Lichtpulse und/oder der Abstand der steigenden Flanken der Lichtpulse ausgewertet wird.

Der Erfindung liegt dabei die Erkenntnis zugrunde, dass die Pulsformen und auch die Pulsbreiten von empfangenen Lichtpulsen sehr stark vom Sender- Empfänger-Abstand abhängen, jedoch der Abstand der fallenden Flanken zweier Lichtpulse einer Pulsfolge genauso wie der Abstand der steigenden Flanken zweier Lichtpulse einer Pulsfolge nur eine äußerst geringe Abstandsabhängigkeit aufweisen, so dass diese zuverlässige Kenngrößen für die Erkennung der Pulsfolgen bilden.

Damit wird die Funktionalität der erfindungsgemäßen Lichtschrankenanordnung ohne nennenswerten konstruktiven Mehraufwand erheblich erweitert, da die Lichtschrankenanordnung für einen großen Abstandsbereich zwischen Sender und Empfänger eingesetzt werden kann.

Durch die Aussendung von kodierten Signalen in Form der Pulsfolgen werden den Lichtstrahlen gezielt kodierte Informationen aufgeprägt, anhand derer gegenseitige Beeinflussungen von gleichartigen Lichtschrankenanordnungen oder auch Störungen durch Fremdlichteinstrahlungen vermieden werden können.

Vorteilhaft wird der Abstand der fallenden Flanken der Lichtpulse der Pulsfolge und/oder der Abstand der steigenden Flanken der Lichtpulse der Pulsfolge jeweils mit einem Sollwert verglichen.

Auf diese Weise kann besonders sicher erfasst werden, ob in einem Empfänger empfangene Lichtpulse tatsächlich vom zugeordneten Sender der Lichtschrankenanordnung stammen.

Erfindungsgemäß erfolgt eine Auswahl der Auswertung des Abstands der fallenden Flanken der Lichtpulse und/oder des Abstands der steigenden Flanken der Lichtpulse abhängig von den Signalstärken der Lichtpulse.

Je nach Variation der Signalstärken und damit auch der Pulsformen der Lichtpulse kann die Heranziehung der steigenden oder fallenden Flanken zuverlässige

Ergebnisse zur Bedienung der Pulsabstände und damit der Erkennung der Pulsfolgen liefern. Dies kann beispielsweise in einem Einlernvorgang ermittelt werden, so dass dann mittels einer abstandsabhängigen Kennlinie oder dergleichen im Arbeitsbetrieb vorgegeben werden kann, ob die fallenden oder steigenden Flanken zur Erkennung der Pulsfolgen herangezogen werden.

Zweckmäßig wird die Signalstärke im Lichtpuls anhand deren Pulsbreiten bestimmt.

Dies stellt eine besonders einfache und gleichzeitig zuverlässige Methode der Bestimmung der Signalstärken dar. Dabei ist insbesondere vorteilhaft, dass aufwändige Regelmessungen vermieden werden können.

Für den Fall, dass bei der Lichtschrankenanordnung eine geringe Abhängigkeit der Abstände der fallenden Flanken bzw. steigenden Flanken der Lichtschrankenanordnung vorhanden sind, sind vorteilhaft Kompensationsmittel für eine Berücksichtigung des Abstands von Lichtpulsen in Abhängigkeit deren Signalstärken vorgesehen.

Die Kompensationsmittel können beispielsweise in Form von abstandsabhängigen Korrekturtabellen vorgesehen sein.

Vorteilhaft sind Mittel zum Vergleich der Signalstärken von Lichtpulsen einer Puls folge vorgesehen.

Da der Sender im Rahmen der Bauteiltoleranzen Lichtpulse mit gleichen Signalstärken emittiert, liegt bei einem Empfang von Lichtpulsen mit unterschiedlichen Signalstärken ein Fehler vor, beispielsweise durch Fremdlichteinstrahlung. Derartige Fehler können durch den Vergleich der Signalstärken der empfangenen Lichtpulse aufgedeckt werden.

Weiter vorteilhaft sind Mittel zur Anzeige der Signalstärken von Lichtpulsen vorgesehen.

Eine derartige Anzeige kann zu Diagnosezwecken oder auch als Ausrichthilfe der Ausrichtung der sende- und empfangsseitigen Komponenten der Lichtschrankenanordnung zueinander genutzt werden.

Gemäß einer zweckmäßigen Weiterbildung ist eine Regeleinheit vorgesehen, mittels derer ein Verstärkungsfaktor zur Verstärkung der Empfangssignale des Empfängers geregelt wird.

Damit kann die Nachweisempfindlichkeit der Lichtschrankenanordnung erhöht werden.

Gemäß einer vorteilhaften Ausgestaltung der Erfindung sind Aufzeichnungsmittel zur Aufzeichnung von im Empfänger empfangenen Empfangssignalen als digitale Signalfolgen vorgesehen. Die Auswertung von in den Empfangssignalen enthaltenen Pulsfolgen erfolgt innerhalb vorgegebener Auswertefenster.

Dabei ist eine Nachführung des Auswertefensters auf die Pulsfolge vorgesehen.

Durch die Nachführung des Auswertefensters kann ein Driften der Komponenten der Lichtschrankenanordnung ausgeglichen werden.

Außerdem können durch eine geeignete Dimensionierung Fremdlichteffekte unterdrückt werden oder festgestellt und gemeldet werden.

Vorteilhaft werden die digitalen Signalfolgen über eine Schnittstelle ausgelesen und in einer Speichereinheit abgespeichert.

Die digitalen Signalfolgen liegen dann komplett in der Speichereinheit vor und können dann durch geeignete Vorgaben der Auswertefenster gezielt ausgewertet werden.

Im einfachsten Fall ist die Lichtschrankenanordnung als Einweglichtschranke mit nur einem Sender und nur einem Empfänger ausgebildet.

Gemäß einer vorteilhaften Ausführungsform ist die Lichtschrankenanordnung als Lichtvorhang mit mehreren Strahlachsen ausgebildet, wobei jede Strahlachse einen Sender und einen zugeordneten Empfänger aufweist, auf welchen die Lichtstrahlen dieses Senders bei freiem Überwachungsbereich geführt sind.

Dabei erfolgt zweckmäßig anhand der Pulsfolge einzelner Strahlachsen eine optische Synchronisierung des Lichtvorhangs.

Die Erfindung wird im Folgenden anhand der Zeichnungen erläutert. Es zeigen:
- Figur 1: Ausführungsform der erfindungsgemäßen Lichtschrankenanordnung in Form einer Einweglichtschranke.
- Figur 2: Ausführungsform der erfindungsgemäßen Lichtschrankenanordnung in Form eines Lichtvorhangs.
- Figur 3: Blockschaltbild einer Auswerteeinheit für die Lichtschrankenanordnung gemäß Figur 1.
- Figur 4: Zeitdiagramm einer Pulsfolge für eine Lichtschrankenanordnung gemäß den Figuren 1 und 2.
- Figur 5 a-d: Zeitdiagramm von Pulsfolgen für eine Lichtschrankenanordnung gemäß den Figuren 1 und 2 mit zugeordneten Auswertefenstern.

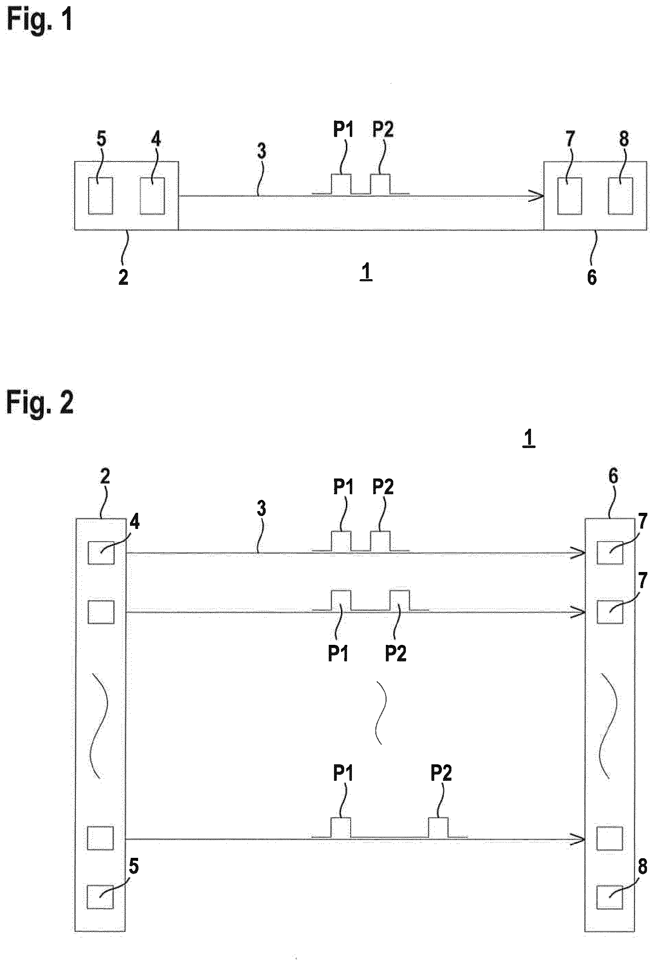

Figur 1 zeigt eine erste Ausführungsform der erfindungsgemäßen Lichtschrankenanordnung 1 in Form einer Einweglichtschranke.

Die Einweglichtschranke weist eine in einem ersten Gehäuse 2 integrierte Sendereinheit mit einem Lichtstrahlen 3 emittierenden Sender 4 in Form einer Leuchtdiode auf. Der Senderbetrieb wird von einer Steuereinheit 5 gesteuert. Weiterhin ist eine in einem zweiten Gehäuse 6 integrierte Empfängereinheit mit einem Empfänger 7 in Form einer Photodiode vorgesehen. Die Empfangssignale des Empfängers 7 werden in einer Auswerteeinheit 8 ausgewertet.

Die Sendereinheit und die Empfängereinheit sind an gegenüberliegenden Rändern eines Überwachungsbereichs angeordnet. Bei freiem Überwachungsbereich treffen die Lichtstrahlen 3 des Senders 4 ungehindert auf den Empfänger 7. Bei einem im Überwachungsbereich vorhandenen Objekt wird durch dieses der Strahlengang der Lichtstrahlen 3 zumindest teilweise unterbrochen. Die dabei erhaltenen Empfangssignale werden zur Generierung eines binären Objektfeststellsignals als Ausgangssignal der Einweglichtschranke ausgenutzt. Die Schaltzustände des Objektfeststellungssignals geben an, ob ein Objekt im Überwachungsbereich vorhanden ist oder nicht.

Wie in Figur 1 schematisch dargestellt, emittiert der Sender 4 gepulste Lichtstrahlen 3, und zwar derart, dass periodisch eine Pulsfolge von zwei durch eine Pulspause getrennte Lichtpulse P1 und P2 emittiert werden, die bei freiem Überwachungsbereich anhand der Empfangssignale des Empfängers 7 von der Auswerteeinheit 8 erkannt werden. Natürlich kann der Sender 4 auch Pulsfolgen mit mehreren Lichtpulsen P1 und P2 emittieren.

Figur 2 zeigt eine Ausführungsform der erfindungsgemäßen Lichtschrankenanordnung 1 in Form eines Lichtvorhangs.

Der Lichtvorhang weist eine in einem Gehäuse 2 integrierte Sendereinheit mit einer Anordnung von Lichtstrahlen 3 emittierenden Sendern 4 in Form von Leuchtdioden auf, die von einer Steuereinheit 5 gesteuert werden. Einer in einem Gehäuse 6 integrierten Empfängereinheit ist eine Anordnung von Empfängern 7 in Form von Photodioden vorgesehen, deren Empfangssignale in einer Auswerteeinheit 8 ausgewertet werden.

Jeweils ein Sensor ist einem Empfänger 7 gegenüberliegend angeordnet und bildet mit diesem eine Strahlachse des Lichtvorhangs. Bei freiem Überwachungsbereich gelangen die Lichtstrahlen 3 jedes Senders 4 ungehindert zum Empfänger 7 deren Strahlachse. Bei einem im Überwachungsbereich vorhandenen Objekt werden die Lichtstrahlen 3 wenigstens eines Senders 4 unterbrochen. In Abhängigkeit der Empfangssignale generiert die Auswerteeinheit 8 ein binäres Objektfeststellungssignal. Das Objektfeststellungssignal nimmt den Schaltzustand "freier Überwachungsbereich" an, wenn keine der Strahlachsen unterbrochen ist. Weiterhin nimmt das Objektfeststellungssignal den Schaltzustand "Objekt vorhanden" an, wenn wenigstens eine Strahlachse unterbrochen ist.

Wie Figur 2 zeigt emittiert jeder Sender 4 periodisch eine Pulsfolge mit zwei Lichtpulsen P1 und P2, die durch eine Pulspause getrennt sind. Die Lichtpulse P1 und P2 einer Pulsfolge sind identisch, und zwar für alle Sender 4 des Lichtvorhangs. Die Pulsfolgen der einzelnen Sender 4 unterscheiden sich zwar durch die Pulspause zwischen den Lichtpulsen P1 und P2. Durch die unterschiedlichen Pulspausen für die Sender 4 können die einzelnen Strahlachsen identifiziert werden. Das wird für eine optische Synchronisation des Lichtvorhangs ausgenutzt. Bei der optischen Synchronisation wird zunächst geprüft, ob die Pulsfolge einer Strahlachse im jeweiligen Empfänger 7 empfangen wird. Ist dies der Fall, werden ausgehend von dieser Strahlachse die Strahlachsen des Lichtvorhangs, d. h. Sender 4 und Empfänger 7, einzeln zyklisch nacheinander aktiviert.

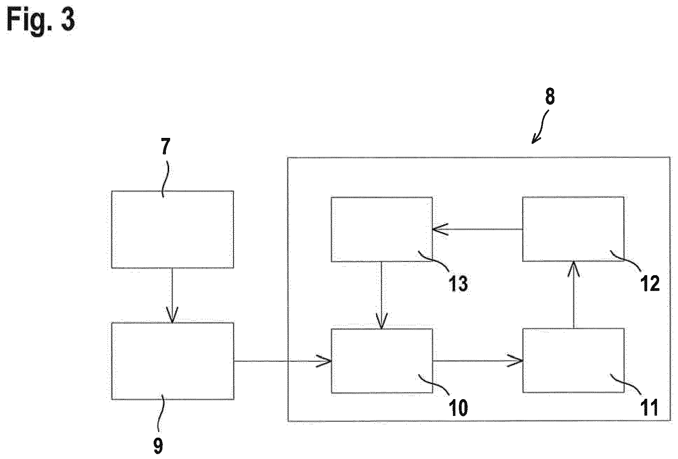

Figur 3 zeigt ein Ausführungsbeispiel der Auswerteeinheit 8 der Lichtschrankenanordnung 1 gemäß Figur 1. Das Empfangssignal des Empfängers 7 wird als Analogsignal einem Komparator 9 zugeführt. Das so digitalisierte Empfangssignal wird über eine Schnittstelle 10, die im vorliegenden Fall als SPI-Schnittstelle 10 ausgebildet ist, der Auswerteeinheit 8 zugeführt. Von dort wird das Empfangssignal direkt über einen DMA (direct memory access) 11 einer Speichereinheit 12 zugeführt, so dass dort der zeitliche Verlauf des Empfangssignals in Form einer digitalen Signalfolge vorliegt. Diese digitale Signalfolge wird dann in einer Rechnereinheit 13 der Auswerteeinheit 8 ausgewertet Die Rechnereinheit 13 steuert auch die Schnittstelle 10.

Die Auswerteeinheit 8 für den Lichtvorhang gemäß Figur 2 weist denselben Aufbau auf. Im Unterschied zur Ausführung gemäß Figur 3 werden dort die Empfangssignale aller Empfänger 7 in einem oder mehreren Komparatoren digitalisiert.

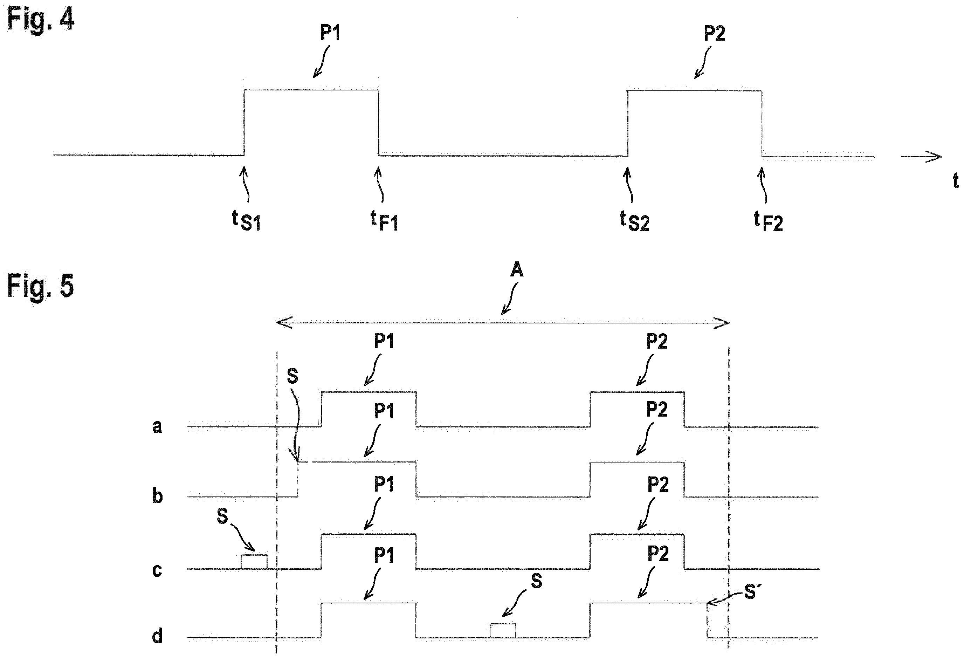

Die Auswertung einer auf diese Weise als digitale Signalfolge in die Auswerteeinheit 8 der Lichtschrankenanordnung 1 gemäß Figur 1 oder 2 eingelesenen Pulsfolgen wird im Folgenden anhand Figur 4 erläutert, die den Verlauf einer Pulsfolge mit zwei auf den Empfänger 7 auftreffenden Lichtpulsen P1 und P2 zeigt.

Die Lichtpulse P1 und P2 weisen dieselbe Pulsform auf, die idealerweise auch empfangsseitig vorliegen. Der erste Lichtpuls P1 weist eine steigende Flanke zum Zeitpunkt tsi und eine fallende Flanke zum Zeitpunkt t_{F1} auf. Entsprechend weist der zweite Lichtpuls P2 eine steigende Flanke (t_{S2}) und eine fallende Flanke (t_{F2}) auf.

Erfindungsgemäß wird die Pulsfolge dadurch erkannt, dass der Abstand der fallenden Flanken der Lichtpulse P1 und P2, d. h. die Zeitdifferenz t_{F2} - t_{F1} ermittelt wird. Alternativ oder zusätzlich wird der Abstand der steigenden Flanken, d. h. die Zeitdifferenz t_{S2} - t_{S1} ermittelt.

Der Erfindung liegt die Erkenntnis zugrunde, dass diese Kenngrößen keine oder eine sehr geringe Abstandsabhängigkeit aufweisen, so dass auch für einen großen Bereich unterschiedlicher Abstände zwischen Sender- und Empfängereinheit die vorgenannten Größen zuverlässige Kenngrößen bilden, anhand derer die Pulsfolge eindeutig erkannt werden kann.

Die Erkennung des Abstands zwischen den steigenden bzw. fallenden Flanken der Lichtpulse P1 und P2 erfolgt vorzugsweise durch einen Vergleich mit einem in der Auswerteeinheit 8 gespeicherten Sollwert.

Wird anhand dieser Kenngrößen eine Pulsfolge erkannt, so liegt für die Lichtstrahlen 3 dieser Strahlachse ein freier Überwachungsbereich vor.

Die Signalstärken, d. h. die Pegel der Empfangssignale für die Lichtpulse P1 und P2 weisen eine starke Abhängigkeit vom Abstand der Sender- und Empfängereinheit der Lichtschrankenanordnung 1 auf.

Als Maß für die Signalstärken der Lichtpulse P1 und P2 werden deren Breiten, d. h. die Zeitdifferenzen t_{F1} - t_{S1} und t_{F2} - t_{S2} bestimmt.

Abhängig von den bestimmten Pulsbreiten kann in der Auswerteeinheit 8 eine Entscheidung gefällt werden, ob die Abstände der fallenden Flanken (t_{F2} - t_{F1}) und/oder die Abstände der steigenden Flanken (t_{S2} - t_{S1}) zur Erkennung der Pulsfolgen herangezogen werden.

Weiterhin kann anhand der bestimmten Pulsbreiten und in Abhängigkeit von in der Auswerteeinheit 8 gespeicherten Korrekturtabellen eine ggf. vorhandene geringe Abstandsabhängigkeit der Abstände der fallenden Flanken (t_{F2} - t_{F1}) oder der Abstände der steigenden Flanken (t_{S2} - t_{S1}) kompensiert werden.

Weiterhin kann anhand der ermittelten Pulsbreiten ermittelt werden, ob die Signalstärken der empfangenen Lichtpulse P1 und P2 stark unterschiedlich sind. Ist dies der Fall, kann eine Fehlermeldung generiert werden.

Weiterhin können Mittel zur Anzeige der Signalstärken der Lichtpulse P1 und P2 vorgesehen sein, insbesondere für eine Ausrichthilfe oder zu Diagnose zwecken.

Schließlich ist eine Regeleinheit vorgesehen, mittels derer ein Verstärkungsfaktor zur Verstärkung der Empfangssignale des Empfängers 7 geregelt wird.

Diese Regelung erfolgt in Abhängigkeit der ermittelten Signalstärken.

Wie die Figuren 5a bis d zeigen, erfolgt die Auswertung des zeitlichen Verlaufs der Empfangssignale, die in Form einer digitalen Signalfolge in der Speichereinheit 12 der Auswerteeinheit 8 gespeichert ist, innerhalb eines Auswertefensters A, das an die vom Sender 4 emittierte Pulsfolge angepasst ist. Die Anpassung kann auch fortlaufend erfolgen, um eventuelle Drifteffekte auszugleichen.

Figur 5a zeigt den Fall eines störungsfreien Empfangs der Lichtpulse P1 und P2. In diesem Fall werden die Lichtpulse P1 und P2 in der Auswerteeinheit 8 erkannt und so wird somit ein freier Überwachungsbereich registriert.

Bei der Ausführungsform der Figur 5c wird zusätzlich zu den Lichtpulsen P1 und P2 ein Störimpuls S empfangen. Durch die Anpassung des Auswertefensters A liegt der Störimpuls S außerhalb des Auswertefensters A und die Lichtpulse P1 und P2 werden entsprechend einem freien Überwachungsbereich korrekt erkannt. Durch die Wahl des Auswertefensters A erfolgt also eine Ausblendung des Störimpulses S und damit eine Erkennung und optional eine Unterdrückung von Fremdlichteinstrahlung.

Bei der Ausführungsform der Figur 5b ist vom ersten Lichtpuls P1 und P2 ein Störimpuls S überlagert. Für den Fall, dass für die Erkennung des Abstands zwischen den Lichtpulsen P1 und P2 deren fallende Flanken ausgewertet werden, kann trotz vorhandenen Störimpulses S die Pulsfolge mit den Lichtpulsen P1 und P2 noch korrekt erkannt werden. Ebenso ist es möglich, bei zusätzlicher Auswertung der Pulsbreiten P1 und P2, die Fremdlichteinstrahlung zu erkennen.

Figur 5d zeigt eine Situation, bei welcher vom Lichtpuls P2 ein erster Störimpuls S' überlagert ist. Zudem ist ein Störimpuls S zwischen den Lichtpulsen P1 und P2 vorhanden. In diesem Fall kann die Pulsfolge der Lichtpulse P1 und P2 nicht mehr korrekt erfasst werden, so dass ein Warnsignal generiert wird.

### Bezugszeichenliste

- (1): Lichtschrankenanordnung
- (2): Gehäuse
- (3): Lichtstrahlen
- (4): Sender
- (5): Steuereinheit
- (6): Gehäuse
- (7): Empfänger
- (8): Auswerteeinheit
- (9): Komparator
- (10): Schnittstelle
- (11): DMA (direct memory access)
- (12): Speichereinheit
- (13): Rechnereinheit
- (A): Auswertefenster
- (P1): Lichtpuls
- (P2): Lichtpuls
- (S): Störimpuls

## Patentansprüche

1. Lichtschrankenanordnung (1) zur Erfassung von Objekten in einem Überwachungsbereich, mit wenigstens einem Sender (4) und wenigstens einem Empfänger (7) an gegenüberliegenden Rändern des Überwachungsbereichs, wobei bei freiem Überwachungsbereich vom Sender (4) emittierte Lichtstrahlen (3) auf den Empfänger (7) geführt sind, und mit einer Auswerteeinheit (8), die ausgebildet ist in Abhängigkeit von Empfangssignalen des Empfängers (7) ein Objektfeststellungssignal zu generieren, wobei der Sender (4) Lichtstrahlen (3) in Form von Pulsfolgen mit wenigstens zwei durch eine Pulspause getrennten Lichtpulsen (P1, P2) emittiert, und wobei die Auswerteeinheit ausgebildet ist eine Pulsfolge dadurch zu erkennen, dass als Maß für den Pulsabstand zwischen Lichtpulsen (P1, P2) der Abstand der fallenden Flanken der Lichtpulse (P1, P2) und/oder der Abstand der steigenden Flanken der Lichtpulse (P1, P2) erfasst wird, **dadurch gekennzeichnet, dass** eine Auswahl der Auswertung des Abstands der fallenden Flanken der Lichtpulse (P1, P2) und/oder des Abstands der steigenden Flanken der Lichtpulse (P1, P2) abhängig von den Signalstärken der Lichtpulse (P1, P2) erfolgt.

2. Lichtschrankenanordnung (1) nach Anspruch 1, **dadurch gekennzeichnet, dass** der Abstand der fallenden Flanken der Lichtpulse (P1, P2) der Pulsfolge und/oder der Abstand der steigenden Flanken der Lichtpulse (P1, P2) der Pulsfolge jeweils mit einem Sollwert verglichen wird.

3. Lichtschrankenanordnung (1) nach einem der Ansprüche 1 oder 2, **dadurch gekennzeichnet, dass** die Signalstärke eines Lichtpulses (P1, P2) anhand dessen Pulsbreiten bestimmt wird.

4. Lichtschrankenanordnung (1) nach einem der Ansprüche 1 bis 3, **dadurch gekennzeichnet, dass** Kompensationsmittel für eine Berücksichtigung des Abstands von Lichtpulsen (P1, P2) in Abhängigkeit deren Signalstärken vorgesehen sind.

5. Lichtschrankenanordnung (1) nach einem der Ansprüche 1 bis 4, **dadurch gekennzeichnet, dass** Mittel zum Vergleich der Signalstärken von Lichtpulsen (P1, P2) einer Pulsfolge vorgesehen sind.

6. Lichtschrankenanordnung (1) nach einem der Ansprüche 1 bis 5, **dadurch gekennzeichnet, dass** Mittel zur Anzeige der Signalstärken von Lichtpulsen (P1, P2) vorgesehen sind.

7. Lichtschrankenanordnung (1) nach einem der Ansprüche 1 bis 6, **dadurch gekennzeichnet, dass** eine Regeleinheit vorgesehen ist, mittels derer ein Verstärkungsfaktor zur Verstärkung der Empfangssignale des Empfängers (7) geregelt wird.

8. Lichtschrankenanordnung (1) nach einem der Ansprüche 1 bis 7, **dadurch gekennzeichnet, dass** Aufzeichnungsmittel zur Aufzeichnung von im Empfänger (7) empfangenen Empfangssignalen als digitale Signalfolgen vorgesehen sind, und dass die Auswertung von in den Empfangssignalen enthaltenen Pulsfolgen innerhalb vorgegebener Auswertefenster erfolgt.

9. Lichtschrankenanordnung (1) nach Anspruch 8, **dadurch gekennzeichnet, dass** eine Nachführung des Auswertefensters auf die Pulsfolge vorgesehen ist.

10. Lichtschrankenanordnung (1) nach einem der Ansprüche 8 oder 9, **dadurch gekennzeichnet, dass** die digitalen Signalfolgen über eine Schnittstelle (10) eingelesen und in einer Speichereinheit (12) abgespeichert werden.

11. Lichtschrankenanordnung (1) nach einem der Ansprüche 1 bis 10, **dadurch gekennzeichnet, dass** Mittel für eine Fremdlichterkennung vorgesehen sind.

12. Lichtschrankenanordnung (1) nach einem der Ansprüche 1 bis 11, **dadurch gekennzeichnet, dass** diese als Lichtvorhang mit mehreren Strahlachsen ausgebildet ist, wobei jede Strahlachse einen Sender (4) und einen zugeordneten Empfänger (7), auf welchen die Lichtstrahlen (3) dieses Senders (4) bei freiem Überwachungsbereich geführt sind, aufweist.

13. Lichtschrankenanordnung (1) nach Anspruch 12, **dadurch gekennzeichnet, dass** anhand der Pulsfolge einzelner Strahlachsen eine optische Synchronisierung des Lichtvorhangs erfolgt.

14. Verfahren zur Erfassung von Objekten in einem Überwachungsbereich mittels einer Lichtschrankenanordnung (1), mit wenigstens einem Sender (4) und wenigstens einem Empfänger (7) an gegenüberliegenden Rändern des Überwachungsbereichs, wobei bei freiem Überwachungsbereich vom Sender (4) emittierte Lichtstrahlen (3) auf den Empfänger (7) geführt sind und mit einer Auswerteeinheit (8), in welcher in Abhängigkeit von Empfangssignalen des Empfängers (7) ein Objektfeststellungssignal generiert wird, wobei der Sender (4) Lichtstrahlen (3) in Form von Pulsfolgen mit wenigstens zwei durch eine Pulspause getrennten Lichtpulsen (P1, P2) emittiert, und wobei eine Pulsfolge dadurch erkannt wird, dass als Maß für den Pulsabstand zwischen Lichtpulsen (P1, P2) der Abstand der fallenden Flanken der Lichtpulse (P1, P2) und/oder der Abstand der steigenden Flanken der Lichtpulse (P1, P2) erfasst wird, **dadurch gekennzeichnet, dass** eine Auswahl der Auswertung des Abstands der fallenden Flanken der Lichtpulse (P1, P2) und/oder des Abstands der steigenden Flanken der Lichtpulse (P1, P2) abhängig von den Signalstärken der Lichtpulse (P1, P2) erfolgt.

## Claims

1. An Optical barrier device (1) for detecting objects in a monitoring area, having at least one transmitter (4) and at least one receiver (7) at opposite edges of the monitoring area, light beams (3) emitted by the transmitter (4) being guided to the receiver (7) when the monitoring area is free, and having an evaluation unit (8) which is designed to generate an object detection signal as a function of received signals from the receiver (7), the transmitter (4) emitting light beams (3) in the form of pulse sequences with at least two light pulses (P1, P2) separated by a pulse pause, and the evaluation unit being designed to detect a pulse sequence in that the distance between the falling edges of the light pulses (P1, P2) and/or the distance between the rising edges of the light pulses (P1, P2) is detected as a measure of the pulse interval between light pulses (P1, P2), P2) is detected, **characterised in that** a selection of the evaluation of the spacing of the falling edges of the light pulses (P1, P2) and/or the spacing of the rising edges of the light pulses (P1, P2) takes place depending on the signal strengths of the light pulses (P1, P2).

2. The optical barrier device (1) according to claim 1, **characterised in that** the spacing of the falling edges of the light pulses (P1, P2) of the pulse train and/or the spacing of the rising edges of the light pulses (P1, P2) of the pulse train is in each case compared with a setpoint value.

3. The optical barrier device (1) according to one of claims 1 or 2, **characterised in that** the signal strength of a light pulse (P1, P2) is determined on the basis of its pulse widths.

4. The optical barrier device (1) according to one of claims 1 to 3, **characterised in that** compensation means are provided for taking into account the distance of light pulses (P1, P2) depending on their signal strengths.

5. The optical barrier device (1) according to one of claims 1 to 4, **characterised in that** means are provided for comparing the signal strengths of light pulses (P1, P2) of a pulse train.

6. The optical barrier device (1) according to one of claims 1 to 5, **characterised in that** means are provided for displaying the signal strengths of light pulses (P1, P2).

7. The optical barrier device (1) according to one of claims 1 to 6, **characterised in that** a control unit is provided by means of which a gain factor for amplifying the received signals of the receiver (7) is controlled.

8. The optical barrier device (1) according to one of claims 1 to 7, **characterised in that** recording means are provided for recording received signals received in the receiver (7) as digital signal sequences, and **in that** the evaluation of pulse sequences contained in the received signals takes place within predetermined evaluation windows.

9. The optical barrier device (1) according to claim 8, **characterised in that** a tracking of the evaluation window to the pulse sequence is provided.

10. The optical barrier device (1) according to one of claims 8 or 9, **characterised in that** the digital signal sequences are read in via an interface (10) and stored in a memory unit (12).

11. The optical barrier device (1) according to one of claims 1 to 10, **characterised in that** means for extraneous light detection are provided.

12. The optical barrier device (1) according to one of the claims 1 to 11, **characterised in that** this is designed as a light curtain with several beam axes, each beam axis having a transmitter (4) and an associated receiver (7) to which the light beams (3) of this transmitter (4) are guided when the monitoring area is free.

13. The optical barrier device (1) according to claim 12, **characterised in that** an optical synchronisation of the light curtain takes place on the basis of the pulse sequence of individual beam axes.

14. A method for detecting objects in a monitored area by means of a optical barrier device (1), having at least one transmitter (4) and at least one receiver (7) at opposite edges of the monitored area, light beams (3) emitted by the transmitter (4) being guided onto the receiver (7) when the monitored area is free, and having an evaluation unit (8), in which an object detection signal is generated as a function of received signals of the receiver (7), wherein the transmitter (4) emits light beams (3) in the form of pulse sequences with at least two light pulses (P1, P2) separated by a pulse pause, and a pulse sequence being detected in that the distance between the falling edges of the light pulses (P1, P2) and/or the distance between the rising edges of the light pulses (P1, P2) is detected as a measure of the pulse spacing between light pulses (P1, P2), **characterised in that** a selection of the evaluation of the distance between the falling edges of the light pulses (P1, P2) and/or the distance between the rising edges of the light pulses (P1, P2) is made as a function of the signal strengths of the light pulses (P1, P2).

## Revendications

1. Système de barrière lumineuse (1) pour la détection d'objets dans une zone de surveillance, comprenant au moins un émetteur (4) et au moins un récepteur (7) sur des bords opposés de la zone de surveillance, les rayons lumineux (3) émis par l'émetteur (4) étant guidés vers le récepteur (7) lorsque la zone de surveillance est libre, et avec une unité d'évaluation (8) qui est conçue pour générer un signal de détection d'objet en fonction des signaux reçus du récepteur (7), l'émetteur (4) émettant des faisceaux lumineux (3) sous la forme de séquences d'impulsions avec au moins deux impulsions lumineuses (P1, P2) séparées par une pause d'impulsion, et l'unité d'évaluation étant conçue pour détecter une séquence d'impulsions en ce que la distance entre les fronts descendants des impulsions lumineuses (P1, P2) et/ou la distance entre les fronts montants des impulsions lumineuses (P1, P2) est détectée comme mesure de l'intervalle entre les impulsions lumineuses (P1, P2), **caractérisé en ce qu'**une sélection de l'évaluation de l'intervalle entre les fronts descendants des impulsions lumineuses (P1, P2) et/ou de l'intervalle entre les fronts montants des impulsions lumineuses (P1, P2) a lieu en fonction des intensités de signal des impulsions lumineuses (P1, P2).

2. Système de barrière lumineuse (1) selon la revendication 1, **caractérisé en ce que** l'écart entre les fronts descendants des impulsions lumineuses (P1, P2) du train d'impulsions et/ou l'écart entre les fronts montants des impulsions lumineuses (P1, P2) du train d'impulsions est comparé à une valeur de consigne dans chaque cas.

3. Système de barrière lumineuse (1) selon l'une des revendications 1 ou 2, **caractérisé en ce que** l'intensité du signal d'une impulsion lumineuse (P1, P2) est déterminée sur la base de ses largeurs d'impulsion.

4. Système de barrière lumineuse (1) selon l'une des revendications 1 à 3, **caractérisé en ce que** des moyens de compensation sont prévus pour prendre en compte la distance des impulsions lumineuses (P1, P2) en fonction de leurs intensités de signal.

5. Système de barrière lumineuse (1) selon l'une des revendications 1 à 4, **caractérisé en ce que** des moyens sont prévus pour comparer les intensités de signal des impulsions lumineuses (P1, P2) d'un train d'impulsions.

6. Système de barrière lumineuse (1) selon l'une des revendications 1 à 5, **caractérisé en ce que** des moyens sont prévus pour afficher les intensités de signal des impulsions lumineuses (P1, P2).

7. Système de barrière lumineuse (1) selon l'une des revendications 1 à 6, **caractérisé en ce qu'**il est prévu une unité de commande au moyen de laquelle est commandé un facteur de gain pour l'amplification des signaux reçus du récepteur (7).

8. Système de barrière lumineuse (1) selon l'une des revendications 1 à 7, **caractérisé en ce que** des moyens d'enregistrement sont prévus pour enregistrer les signaux reçus dans le récepteur (7) sous forme de séquences de signaux numériques, et **en ce que** l'évaluation des séquences d'impulsions contenues dans les signaux reçus a lieu dans des fenêtres d'évaluation prédéterminées.

9. Système de barrière lumineuse (1) selon la revendication 8, **caractérisé en ce qu'**un suivi de la fenêtre d'évaluation par rapport à la séquence d'impulsions est prévu.

10. Système de barrière lumineuse (1) selon l'une des revendications 8 ou 9, **caractérisé en ce que** les séquences de signaux numériques sont lues par une interface (10) et stockées dans une unité de mémoire (12).

11. Système de barrière lumineuse (1) selon l'une des revendications 1 à 10, **caractérisé en ce que** des moyens de détection de la lumière parasite sont prévus.

12. Système de barrière lumineuse (1) selon l'une des revendications 1 à 11, **caractérisé en ce qu'**il est conçu comme un rideau lumineux avec plusieurs axes de rayonnement, chaque axe de rayonnement présentant un émetteur (4) et un récepteur associé (7) vers lequel les rayons lumineux (3) de cet émetteur (4) sont guidés lorsque la zone de surveillance est libre.

13. Système de barrière lumineuse (1) selon la revendication 12, **caractérisé en ce qu'**une synchronisation optique du rideau lumineux a lieu sur la base de la séquence d'impulsions des différents axes de faisceau.

14. Procédé de détection d'objets dans une zone surveillée au moyen d'un système de barrage photoélectrique (1), comprenant au moins un émetteur (4) et au moins un récepteur (7) sur des bords opposés de la zone surveillée, les rayons lumineux (3) émis par l'émetteur (4) étant dirigés sur le récepteur (7) lorsque la zone surveillée est libre, et comprenant une unité d'évaluation (8) dans laquelle un signal de détection d'objet est généré en fonction des signaux reçus du récepteur (7), l'émetteur (4) émettant des rayons lumineux (3) sous la forme de séquences d'impulsions avec au moins deux impulsions lumineuses (P1), P2) séparées par une pause d'impulsion, et une séquence d'impulsions étant détectée en ce que la distance entre les fronts descendants des impulsions lumineuses (P1, P2) et/ou la distance entre les fronts montants des impulsions lumineuses (P1, P2) est détectée comme mesure de l'espacement entre les impulsions lumineuses (P1, P2), **caractérisé en ce qu'**une sélection de l'évaluation de la distance entre les fronts descendants des impulsions lumineuses (P1, P2) et/ou de la distance entre les fronts montants des impulsions lumineuses (P1, P2) est effectuée en fonction des intensités de signal des impulsions lumineuses (P1, P2).
